# EUROPEAN PATENT APPLICATION

(11) **EP 1 760 190 A1**
(43) Date of publication of application: **07.03.2007**
(21) Application number: 05741362.7
(22) Date of filing: 23.05.2005
(51) Int. Cl.: D07B 1/06, B60C 9/00, B60C 9/20

(54) **STEEL CORD FOR REINFORCING RUBBER ARTICLE, AND PNEUMATIC TIRE**

(30) Priority: 28.05.2004 JP 2004158772
(71) Applicant: Bridgestone Corporation, Tokyo 104-0031 (JP)
(72) Inventor: Obana, Naohiko; c/o Bridgestone Corporation, Kodaira-shi, Tokyo;1870031 (JP)
(74) Representative: Whalley, Kevin
(86) International application number: PCT/JP2005/009327
(87) International publication number: WO 2005/121440

(57) **Abstract**

A steel cord for reinforcing a rubber article and a pneumatic tire. When it is a reinforcement material for a tire belt, the steel cord is capable of satisfying weight lightening, durability and driving stability.

The steel cord comprises a core made by parallelly arranging two non-twisted core wires (1) and from one layer of sheath made by twisting three to five sheath wires (2) around the core. The outline shape of the cord in a cross-section orthogonal to the axis of the cord is flat The inclination, as seen from the side of the cord, of the core wires is 3° or less relative to the cord axis.

## Description

### Technical Field

The present invention is related to a steel cord for reinforcing a rubber article and a pneumatic tire, particularly a steel cord used as a reinforcement material for a rubber article such as pneumatic tire and industrial use belt, and a pneumatic tire comprising the steel cord as a reinforcement material. In the present invention, the rubber article, particularly the pneumatic tire, reinforced by the steel cord, achieves weight lightening without losing durability.

### Background Art

In pneumatic tires as s typical rubber article, it is known as a factor of durability deterioration that water penetrating from outside the tire to the inside belt through a cut and the like causes corrosion of a belt cord, and the corrosion area expansion removes the cord of the rubber to produce separation.

To avoid this separation, effective is so called "a rubber penetration structure", in which rubber penetrates inward the cord well enough not to form clearance which transmits water between filaments. In this rubber penetration structure, rubber permeation is realized by loosely twisting cords to increase the clearance between the filaments. This structure is especially suitable for a single twist cord of the structures of 1 x 3 and 1 x 5.

However, in terms of performance such as comfortability for ride and driving stability, the steel cord of high stiffness has been required recently. It is possible to secure tensile stiffness of the belt by increasing the number of driving cord in the tire belt. However, it becomes a cause of increasing tire weight, and besides, it becomes easy to invite belt edge separation in which clearance between adjacent cords is narrow in the belt, thereby rubber separation is easily transmitted, beginning at cord edge in belt width direction.

Patent reference 1 proposes a steel cord of a 2 + 4 twisting structure as a steel cord having high stiffness. Stiffness of this steel cord is relatively higher than that of a 1 x N structure which produces softness depending on twist.
Patent reference 1: JP 2002-227081 A

### Disclosure of Invention

### Problems to be Solved by the Invention

However, with regard to the steel cord of Patent reference 1, because a bundle of two steel wires constituting a core is subjected to wave spiral reforming, there is no clearance between the core wire and the sheath element during tensile force application on the cord in manufacturing tires, thereby enough rubber permeability inward the cord can not be obtained. Thus there is a problem of occurrence of separation phenomena.

Then an object of the present invention is to provide a steel cord which is capable of increasing tensile stiffness of a rubber article without inviting durability deterioration due to separation generated around the cord in the rubber article reinforced by the steel cord and which is based on a structure of 2 + n (n=3 to 5) capable of improving cord productivity more than a structure of 1 x N.

Further, another object of the present invention is to provide a pneumatic tire which satisfies weight lightening, durability, and driving stability simultaneously by applying the above mentioned steel cord to reinforcement materials for belts.

### Means for Solving the Problems

In order to solve the above mentioned problems, the steel cord for reinforcing a rubber article related to the present invention comprises a core formed of two non-twisted core wires parallelly arranged in longitudinal direction, and a single layered sheath formed of three to five sheath wires twisted around the above mentioned core, wherein the cord for reinforcing a rubber article has a flat outline shape in a cross section orthogonal to the cord axis and an inclination of the core wire viewed from the side of the cord is 3° or less with respect to the cord axis.

Further, in the pneumatic tire of the present invention, the steel cord for reinforcing the above mentioned rubber article is used as a reinforcement material for belts.

### Advantages of the Invention

The steel cord of the present invention can increase tensile stiffness of a rubber article without inviting durability deterioration due to separation generated around the cord in the rubber article, thereby capable of satisfying weight lightening, durability and driving stability simultaneously in the pneumatic tire.

### Brief Description of the Drawings

Fig. 1 is a schematic diagram showing a steel cord of Example 1
Fig. 2 is an enlarged cross sectional diagram showing the steel cord of Examples 1, 3, and 4.
Fig. 3 is an enlarged cross sectional diagram showing the steel cord of Example 1
Fig. 4 is an enlarged cross sectional diagram showing the steel cord of a comparative example.

| Reference Numerals | |
|---|---|
| 1 | Core wire |
| 2 | Sheath wire |
| P | Pitch |

### Best Mode for Carrying Out the Invention

Hereinafter, examples of the present invention will be described in detail.

A steel cord for reinforcing a rubber article of the present invention comprises a core formed of two non-twisted core wires parallelly arranged in a longitudinal direction; and a single layered sheath formed of three to five sheath wires twisted around the core, wherein the cord for reinforcing a rubber article has a flat outline shape in a cross section orthogonal to the cord axis. With this configuration, stiffness is relatively higher than steel cord of a 1 x N structure and cord productivity is improved more than cord of a 1 x N structure.

Here in the present invention, inclination of the core wire, viewed from the side of the cord, is required 3° or less preferably substantial 0° with respect to the cord axis. This is because cord elongation caused by tension applied during manufacturing tires is restricted and a closed space between the core and sheath is not formed by aligning core wires laterally and substantially straightly. With this, rubber can easily permeate between the core wire and the sheath wire to prevent separation in which water penetrated inward from outside the tire through a cut and the like corrodes the belt cords and the corroded area expands to cause removal between the cord and the rubber.

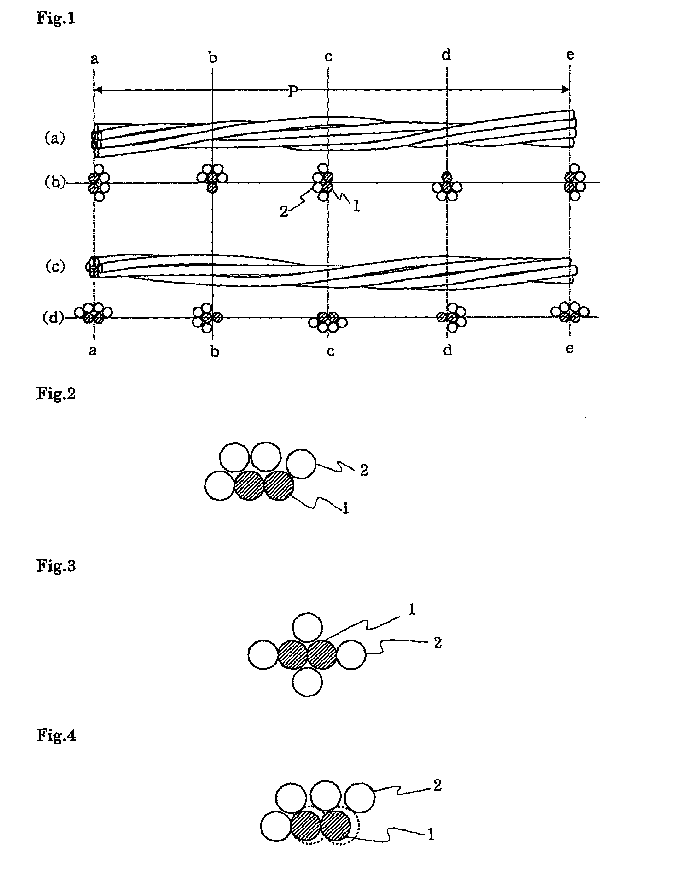

In the steel cord for reinforcing a rubber article related to the present invention, it is preferable that the sheath wires are not univromly dispersed around the core in arrangement but in uneven arrangement (Ref. to FIG. 1 in the example later described). With this arrangement, vertical thickness of the cord can be reduced and further thickness of the belt layer can be reduced, thereby capable of reducing weight of the tire. And improved are softness against buckling deformation of the belt and cord breakage which are occurred outside the wheel tread during cornering.

It is preferable in view of weight lightening that tensile strength of the core wire and the sheath wire is 2.9kN/mm² (300kg/mm²) or more. Further, diameter of the core wire and the sheath wire is preferably in the range from 0.21mm to 0.24mm. It is difficult to secure belt strength with less than 0.21mm, while stiffness of bending outward the belt face becomes too high to decrease driving stability with more than 0.24 mm. The same wire diameter between the core wire and the sheath wire is advantageous in terms of productivity.

In the pneumatic tire of the present invention, ply in which a plurality of steel cords aligned in parallel with each other are embedded in the rubber sheet is applied as a belt. Tire structure except for belt is not especially restricted and appropriate structure may be employed according to common practice.

When the steel cord of the present invention is applied to a reinforcement material for belts, it is required that lateral alignment of the core wires is arranged substantially along the belt width. With this arrangement, stiffness against inward bending deformation produced along the belt face increases to improve tire driving stability. That means, in the steel cord of the present invention, because two core wires are laterally aligned and the core wires are laterally contact with each other, friction between core wires reacts against lateral bending deformation to increase stiffness of the lateral cord bending, and thereby lateral cord alignment is substantially along the belt width direction to increase inward bending stiffness in the tire belt. Further in the steel cord of the present invention, because vertical thickness is smaller than that of the conventional steel cord having a circular section, thickness of the rubber article such as belt also becomes smaller, thereby capable of reducing weight.

### EXAMPLES

Hereinafter, examples of the present invention will be described based on examples and a comparative example.

### EXAMPLE 1

FIG. 1 shows a steel cord of a 2 + 4 twisting structure. In the drawing, (a) is a partial side view seen from the above. (b) is a cross sectional view of a section orthogonal to the cord axis at positions of a - a, b - b, c - c, d - d, e - e of (a). (c) is a partial side view seen from the side. (d) is a cross sectional view of a section orthogonal to the core axis at a positions of a - a, b - b, c - c, d - d, e - e of (c). 1 is a core wire, 2 is a sheath wire, two core wires 1 are substantially straight along the core axis, and two cores are held in parallel. Four sheath wires 2 are twisted on the external layer of the core wires 1 with a pitch P of 14mm.

In producing such a steel cord, winding off tension during twisting wires was set higher than that of the sheath to reduce inclination of the core cord axis direction, thereby making an after forming amount appropriate.

FIG. 2 shows an enlarged cross section of these steel cords with the section orthogonal to the cord axis. A specification of these steel cords (wire diameter, wire tensile strength, core wire inclination viewed from the side of the cord (core inclination in a cord major axis direction and core inclination in a cord minor axis direction, where "the major axis direction" is the maximum dimension direction of the cord cross section per pitch of sheath and the "minor axis direction" is a direction orthogonal to the major axis direction)) is shown in Table 1 below.

The produced steel cord was applied to a belt formed of a first belt layer and a second belt layer at driving frequency shown in Table 1 for trail production of a tire of size 185/70R14. The inner first belt layer was arranged on a carcass with the steel cord inclined at an angle of left 22° with respect to a tire equational plane, and the second belt layer was further arranged with the steel cord inclined at an angle of right 22° with respect to a tire equational plane.

After the trial tire was mounted on a standard lim provided by JATMA standard, the tire was filled with inner pressure corresponding to the maximum load capacity of JATMA YEAR BOOK and mounted on a passenger car. After driving 50000km on the paved roads, the tire was analyzed to examine a cord corrosion length from a cut and a crack length at the belt edge. If the corrosion length is 10mm or less and the crack length is 2mm or less, there is no problem with durability. With regard to driving stability, feeling evaluation was made by three drivers by driving with tires in the same driving mode on the specified test road. This feeling evaluation was conducted with scores of one to ten, and calculated by medium score of three drivers. If the value is 6.5 or more, there is no practical problem. These evaluation and examination result are described in Table 1 below.

### EXAMPLE 2 to 4, COMPARATIVE EXAMPLE

Steel cords of the specification shown in Table 1 below were produced as examples 2 to 4, and comparative example. Fig. 3 shows an enlarged cross section orthogonal to a cord axis of steel cord of Example 2. As shown in FIG. 3, sheath wires 2 are substantially uniformly dispersed in arrangement of this steel cord. Enlarged cross sections orthogonal to a cord axis of steel cord of Examples 3 and 4 are same with FIG. 2. FIG. 4 shows an enlarged cross section orthogonal to a cord axis of steel cord of a comparative example.

Trial tires were produced using these steel cords similarly with Example 1 and the similar evaluation was conducted. And belt weight is expressed by index based on Example 1 as 100. The smaller value shows the lighter weight. Further, a value of multiplication of respective medium values of corrosion length and crack length of evaluation items related to durability is added with evaluation result of lightweight property (belt weight) and driving stability. This evaluation result is regarded as a general evaluation and expressed in scores of one to ten. These results are included in Table 1.

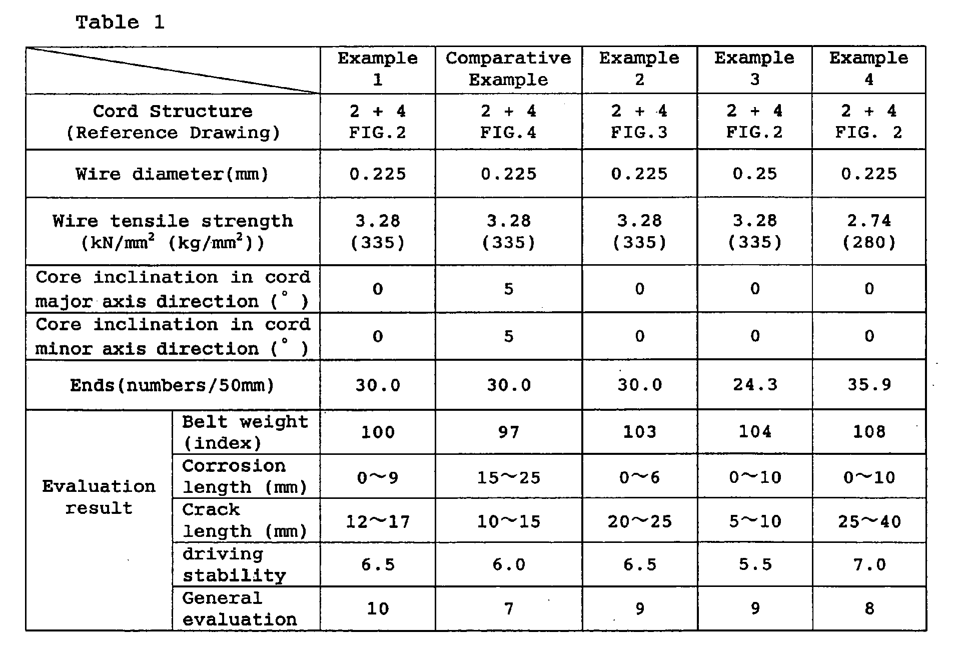

## Claims

1. A steel cord for reinforcing a rubber article comprising:
a core formed of two non-twisted core wires parallelly arranged in a longitudinal direction; and
a single-layered sheath formed of three to five sheath wires twisted around said core,
wherein the cord for reinforcing a rubber article has a flat outline shape in a cross section orthogonal to the cord axis and an inclination of the core wire, viewed from the side of the cord, is 3° or less with respect to a cord axis.

2. The steel cord for reinforcing a rubber article according to claim 1, wherein said sheath wires are not uniformly dispersed around said core in arrangement but in uneven arrangement.

3. The steel cord for reinforcing a rubber article according to claim 1, wherein tensile strength of said core wire and said sheath wire is 2.9kN/mm²(300kg/mm²) or more.

4. The steel cord for reinforcing a rubber article according to claim 1, wherein diameter of said core wire and said sheath wire is 0.21mm to 0.24mm.

5. A pneumatic tire, wherein the steel cord for reinforcing a rubber article according to any one of claims 1 to 4 is used as a reinforcement material for belts.

6. The pneumatic tire according to claim 5, wherein a lateral alignment of core wires of said steel cord for reinforcing the rubber article is along a width direction of the belt.
